Europäisches Patentamt

European Patent Office

Office européen des brevets

(19)

(11) Numéro de publication : **0 055 634**
**B1**

(12)

# FASCICULE DE BREVET EUROPÉEN

(45) Date de publication du fascicule du brevet :
05.06.85

(21) Numéro de dépôt : 81401465.0

(22) Date de dépôt : 22.09.81

(51) Int. Cl.⁴ : **E 21 B 47/00**, **G 01 V 11/00**,
**G 01 V 1/24**

(54) **Procédé d'enregistrement d'une caractéristique physique de la périphérie d'un sondage.**

(30) Priorité : 30.09.80 FR 8020890

(43) Date de publication de la demande :
07.07.82 Bulletin 82/27

(45) Mention de la délivrance du brevet :
05.06.85 Bulletin 85/23

(84) Etats contractants désignés :
DE FR GB IT NL

(56) Documents cités :
FR-A- 2 279 117
US-A- 3 321 770
US-A- 3 680 042
WORLD OIL, vol. 185, no. 6, (novembre 1977), pages
79-92, Houston, Texas, US, G.O. SUMAN et al.:
"Cementing oil and gaswells"

(73) Titulaire : **SOCIETE DE PROSPECTION ELECTRIQUE
SCHLUMBERGER**
**42, rue Saint-Dominique**
**F-75340 Paris Cedex 07 (FR)**
**FR IT**
**Schlumberger Limited**
**277 Park Avenue**
**New York, N.Y. 10172 (US)**
**DE GB NL**

(72) Inventeur : **Seeman, Bronislaw**
**93, route des Gardes**
**F-92190 Meudon (FR)**

(74) Mandataire : **Chareyron, Lucien et al**
**Schlumberger Limited Service Brevets c/o Giers 12,**
**place des Etats-Unis B.P. 121**
**F-92124 Montrouge Cedex (FR)**

Jouve, 18, rue St-Denis, 75001 Paris, France

## Description

L'invention se rapporte aux diagraphies pour l'étude des sondages et plus particulièrement à un procédé et dispositif pour produire un enregistrement graphique d'une caractéristique physique de la périphérie d'un sondage, ainsi qu'à l'enregistrement ainsi obtenu.

Certains appareils de diagraphie mesurent une caractéristique de la périphérie d'un sondage, c'est-à-dire de la zone proche entourant le trou foré, sur des portions de cette périphérie réparties tout autour du sondage. Une caractéristique particulièrement intéressante de cette périphérie est notamment la qualité de liaison du ciment sur le pourtour du tubage du sondage.

La fonction principale du ciment est d'isoler entre elles les formations pour éviter en particulier des écoulements de fluides le long du tubage entre des couches aquifères et d'autres formations contenant des hydrocarbures. Il est donc très important de connaître la qualité de liaison du ciment tout autour du tubage.

Un dispositif de diagraphie pour obtenir cette information est décrit dans le brevet français n° 2 400 613 (inventeur R. M. Havira). Dans un mode de réalisation, l'appareil de fond comprend plusieurs transducteurs acoustiques, par exemple huit, orientés en hélice autour du corps pour inspecter toute la périphérie du tubage. Pour chaque transducteur on élabore un signal représentatif de la qualité de liaison du ciment sur la partie de tubage correspondant au champ d'exploration de ce transducteur.

Un avantage de ce dispositif est d'étudier la liaison du ciment sur des surfaces de grandeur limitée de la périphérie du tubage permettant ainsi d'identifier des voies de communication entre certaines formations bien que la qualité moyenne du ciment paraisse bonne. Une des difficultés que l'on rencontre se situe dans l'enregistrement des résultats. En effet, si, de façon classique, on enregistre une trace pour chaque signal de sortie sur un film-support en fonction de la profondeur, on obtient une multiplicité de courbes qui sont inexploitables directement et souvent même difficiles à séparer les unes des autres. De plus, il est souhaitable de fournir d'autres données, comme par exemple la qualité moyenne du ciment, qui compliquent encore la présentation.

On a déjà proposé, dans le brevet français n° 1 423 605, des techniques de diagraphie pour fournir une représentation visuelle continue de la paroi du sondage ou des couches de formations qui l'entourent. Des signaux provenant d'électrodes de courant sont utilisés pour moduler en intensité un oscilloscope. Le but recherché est d'obtenir une image des limites entre les couches de formations en vue d'en déduire le pendage. Seules les frontières entre les changements de nuance de l'enregistrement donnent l'information recherchée sur les limites de couches. Les nuances elles-mêmes qui correspondent à des valeurs de résistivité, n'ont pas à proprement parler d'intérêt. En outre, un spot dont l'intensité est modulée proportionnellement à l'amplitude du signal ne donne pas une répartition de nuances satisfaisante.

Une technique utilisée pour représenter la qualité moyenne du ciment tout autour du tubage, est celle décrite dans l'article intitulé « Cementing oil and gas wells », parue dans la revue World Oil (Vol. 185, n° 6 de Novembre 1977). Les pics positifs et négatifs de l'onde acoustique recueillie sont respectivement représentés en gris et en blanc. L'intensité du gris est directement proportionnelle à l'amplitude du pic positif. Une technique similaire est celle décrite dans le brevet US-A-3 680 042.

Il est également connu de représenter les nuances de gris à l'aide de points plus ou moins espacés, dont la densité est proportionnelle à l'intensité du signal étudié. Un tel procédé est utilisé dans le brevet US-A-3 321 770 pour l'enregistrement de signaux sismiques.

Les techniques évoquées précédemment ne permettent pas de représenter, d'une manière claire à l'œil, la valeur des caractéristiques étudiées.

L'objet de l'invention se rapporte à un enregistrement graphique d'une caractéristique de la périphérie d'un sondage, dans lequel cette périphérie est représentée sous forme d'une surface développée dont la nuance en chaque zone indique de façon claire et rapide la valeur de la caractéristique à cet emplacement.

L'objet de l'invention concerne en outre un procédé et un dispositif pour obtenir un tel enregistrement.

Selon l'invention, un procédé pour produire un enregistrement graphique d'une caractéristique physique de la périphérie d'un sondage comprend une première étape consistant à produire à différents niveaux de profondeur du sondage, une pluralité de signaux de mesure respectivement représentatifs de ladite caractéristique physique sur des portions de cette périphérie réparties tout autour du sondage. Une deuxième étape consiste à convertir lesdits signaux de mesure, à chaque niveau de profondeur, en signaux quantifiés ayant un nombre limité de valeurs possibles. Ensuite, parmi un ensemble de codes prédéterminés, adaptés à commander l'enregistrement de nuances échelonnées du blanc au noir et correspondant respectivement auxdites valeurs quantifiées possibles, on sélectionne à chaque niveau un code de nuance pour chaque signal, selon la valeur quantifiée de ce signal. Enfin on enregistre sur un support, à chaque niveau, et avec une échelle de profondeur longitudinale, au moins une ligne transversale modulée par les codes de nuance sélectionnés pour former, dans des bandes longitudinales du support, une série de zones aux nuances respectivement représentatives desdits signaux, de

2

façon à représenter la périphérie du sondage sous forme d'une surface développée dont la nuance en chaque zone indique la valeur de ladite caractéristique à cet emplacement.

Les codes de nuances sont constitués par des successions de digits binaires pour moduler ladite lighne transversale de façon à enregistrer une ligne de points, ces codes ayant des proportions différentes de uns et de zéros pour obtenir des densités différentes de points selon les nuances.

Des perfectionnements de ce procédé sont décrits dans les revendications 3 à 7.

Selon un autre aspect de l'invention, un dispositif pour produire un enregistrement graphique d'une caractéristique physique de la périphérie d'un sondage comprend un appareil de fond adapté à être déplacé dans le sondage et équipé d'une pluralité de transducteurs pour produire à différents niveaux de profondeur du sondage une pluralité de signaux de mesure respectivement représentatifs de ladite caractéristique physique sur des portions de cette périphérie réparties tout autour du sondage. Le dispositif comprend en outre des moyens de traitement pour convertir, à chaque niveau de profondeur, lesdits signaux de mesure en signaux quantifiés ayant un nombre limité de valeurs possibles lesdits moyens de traitement comprenant une mémoire contenant un ensemble de codes prédéterminés adaptés à commander l'enregistrement de nuances échelonnées du blanc au noir et correspondant respectivement aux valeurs quantifiées possibles. Lesdits moyens de traitement sont de plus adaptés à sélectionner, à chaque niveau, dans ladite mémoire, un code de nuance pour chaque signal, selon la valeur quantifiée de ce signal. Le dispositif comprend aussi des moyens d'enregistrement pour enregistrer sur un support, à chaque niveau, et avec une échelle de profondeur longitudinale, au moins une ligne transversale modulée par les codes de nuance sélectionnés pour former dans des bandes longitudinales du support une série de zones aux nuances respectivement représentatives desdits signaux de mesure, de façon à représenter la périphérie du sondage sous forme d'une surface développée dont la nuance en chaque zone indique la valeur de la caractéristique à cet emplacement.

Des perfectionnements de ce dispositif sont décrits dans les revendications 9 à 14.

Les caractéristiques et avantages de l'invention ressortiront d'ailleurs mieux de la description qui va suivre donnée à titre d'exemple non limitatif en référence aux dessins annexés dans lesquels :

La figure 1 est un schéma d'un dispositif de diagraphie connu pour l'obtention d'un enregistrement de la qualité de liaison du ciment avec le tubage ;

la figure 2 est un schéma synoptique de l'enregistreur optique de la figure 1 ;

la figure 3 représente la suite des étapes effectuées par le calculateur de traitement de la figure 1 ;

la figure 4 est une représentation plus détaillée d'une étape de traitement de la figure 3 ; et

la figure 5 est un enregistrement obtenu selon l'invention.

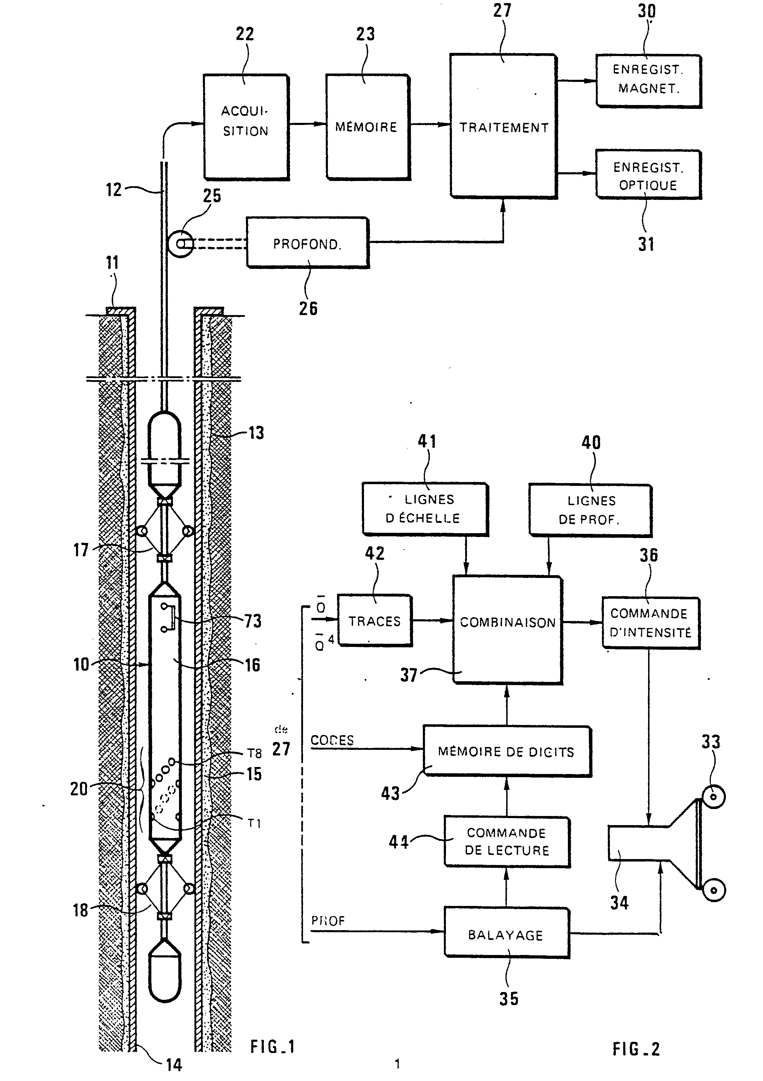

En référence à la figure 1, un dispositif de diagraphie acoustique pour l'étude de la qualité du ciment comprend un appareil de fond 10 suspendu dans un sondage 11 à l'extrémité d'un câble 12 à plusieurs conducteurs. Le sondage 11 qui traverse des formations 13 est équipé d'un tubage 14 entouré de ciment 15 injecté entre ce tubage et les formations. Ce dispositif de diagraphie utilise les principes techniques décrits plus en détail dans le brevet français N° 2 400 613 déjà mentionné. D'une façon générale, l'appareil de fond 10 comprend un corps allongé 16 maintenu dans l'axe du tubage par des centreurs supérieur 17 et inférieur 18. Sur le corps sont fixés huit transducteurs acoustiques 20, T1 à T8, disposés en hélice de façon à inspecter des portions de tubage régulièrement réparties à la périphérie du sondage. Dans le mode de réalisation de la figure, la position d'un transducteur se déduit de la position du précédent par une rotation de 45° autour de l'axe du corps. D'autres dispositions sont évidemment possibles avec des nombres différents de transducteurs et/ou des répartitions différentes de ces transducteurs tout autour du sondage. Chaque transducteur Tn, 20 est commandé pour émettre dans une direction radiale des impulsions acoustiques de faible durée dont le spectre a une fréquence moyenne d'environ 500 KHz. Chaque impulsion émise est réfléchie par les différentes interfaces qu'elle rencontre pour donner un signal d'écho détecté par le même transducteur Tn qui fonctionne alors en récepteur. Ce signal détecté comprend une première partie provenant d'une réflexion initiale sur le tubage et une deuxième partie correspondant à une réverbération à l'intérieur du tubage.

A l'intérieur du corps sont disposés des circuits électroniques reliés à la sortie des transducteurs pour élaborer des signaux bruts, en réponse aux signaux d'écho détectés. Les premiers signaux bruts $W1n$ pour chaque transducteur Tn sont représentatifs de l'amplitude maximale atteinte par la première partie de chaque signal détecté. Des deuxièmes signaux bruts $W2n$ sont obtenus en redressant et intégrant la deuxième partie, dite de réverbération, de chaque signal détecté par chaque transducteur Tn. D'autres signaux bruts peuvent aussi être produits comme par exemple les temps de transit $\Delta tn$ des parties réfléchies sur chaque transducteur. Ces signaux bruts pour les huit transducteurs sont convertis sous forme numérique et transmis en surface par des circuits de transmission connectés aux conducteurs du câble 12. Des circuits pour produire ces signaux bruts sont décrits plus en détail dans le brevet français n° 2 400 613 (Havira) mentionné précédemment.

Les conducteurs du câble 12 sont reliés en surface à des circuits d'acquisition 22 qui traitent les signaux de transmission provenant de l'appareil de fond 10 et inscrivent les signaux bruts $W1n$, $W2n$, $\Delta tn$ dans une mémoire 23. La mémoire 23 est mise à jour à chaque réception de signaux par exemple toutes les 125 millisecondes. Un dispositif détecteur de déplacement du câble comprenant une roue 25 en appui tangentiel sur le câble, commande un générateur d'impulsions de profondeur 26 qui fournit une impulsion chaque fois que le câble s'est déplacé d'une longueur unitaire prédéterminée. On obtient ainsi des signaux représentatifs de la profondeur de l'appareil de fond 10.

Les signaux de profondeur provenant du générateur 26 commandent un calculateur 27 de façon à effectuer une suite d'étapes de traitement à chaque niveau de profondeur. A titre d'exemple, cette série d'étapes peut être effectuée chaque fois que l'appareil de fond s'est déplacé de 5 cm. En d'autres termes, l'intervalle entre deux niveaux de profondeur successivement examinés est de 5 cm.

Le traitement du calculateur 27 fournit un premier ensemble de sigaux de sortie à un enregistreur magnétique 30 qui les enregistre sous forme numérique, niveau par niveau, sur une bande magnétique. Cet enregistrement magnétique permet de traiter les données par ordinateur si on le désire. Le calculateur 27 fournit aussi, pour chaque niveau, un deuxième ensemble de signaux de sortie à un enregistreur optique 31 qui réaliser sur un film un enregistrement graphique particulièrement satisfaisant pour une interprétation visuelle rapide. Dans l'exemple, l'enregistreur est à tube cathodique commandé par des circuits électroniques comme décrit dans le brevet français n° 2 081 628 (inventeur J. W. Elliott.)

En référence à la figure 2 qui représente schématiquement cet enregistreur, un support 33 constitué par un film photographique est déplacé devant un tube cathodique 34 pour être impressionné par le spot lumineux de ce tube. La position transversale du spot sur le film est commandée par un circuit de balayage 35 et sa luminosité est commandé par un circuit d'intensité 36. Le circuit de commande d'intensité 36 est synchronisé avec le circuit de balayage pour débloquer le faisceau d'électrons du tube afin d'inscrire sur le support une ligne transversale modulée en intensité pour former une suite de points.

L'enregistrement obtenu comprend une partie classique ayant une grille formée de lignes de profondeur transversales et de lignes d'échelle longitudinales et des courbes qui représentent sur cette grille les variations portées transversalement de certains signaux de sortie en fonction de la profondeur. Cette partie classique est obtenue en ajoutant dans un circuit de combinaison 37 des signaux provenant de circuits 40 de lignes de profondeur, de circuits 41 de lignes d'échelle et de circuits 42 de traces. Ces circuits sont décrits plus en détail dans le brevet français n° 2 081 628 déjà mentionné.

L'enregistreur 31 comprend de plus une mémoire 43 contenant une succession de digits binaires susceptibles d'être lus sous l'action d'une commande 44 pour être appliqués au circuit de combinaison 37 en synchronisme avec le balayage transversal du film. La mémoire 43 est lue d'un bout à l'autre au cours d'un balayage transversal du support et la lecture de chaque digit binaire de valeur un commande l'inscription d'un point noir sur le film. La mémoire 43 comprend un nombre de digits choisis de façon à pouvoir inscrire transversalement sur le film un point tous les 0,13 mm. Une succession de digits un correspond à une ligne noire transversale continue. Cette mémoire 43 est particulièrement bien adaptée à l'enregistrement de nuances selon l'invention comme expliqué par la suite.

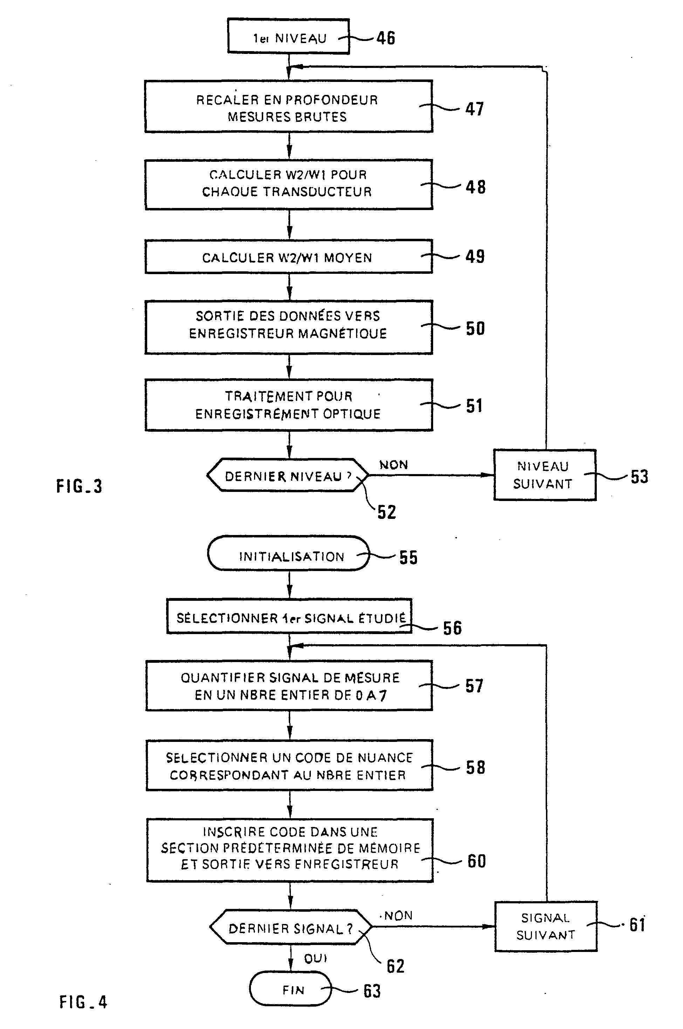

En référence à la figure 3, les étapes du traitement réalisé dans le calculateur 27 sont effectuées niveau par niveau, c'est-à-dire, dans l'exemple, tous les 5 cm, en réponse aux signaux de profondeur provenant du générateur 26. La première étape consiste à recaler en profondeur (bloc 47) les signaux de mesure bruts. Pour ce faire, les signaux de mesure bruts provenant de chaque transducteur $T_n$ de l'appareil de fond sont mis en mémoire pour être lus après un retard correspondant au temps de déplacement vers le haut du transducteur le plus bas $T_1$, jusqu'au niveau du transducteur examiné $T_n$. Ce retard dépend donc de la vitesse de déplacement de l'appareil de fond fournie par le générateur d'impulsions de profondeur 26. Les mesures brutes recalées en profondeur sont ensuite combinées pour obtenir huit séries de signaux $Q_1$ à $Q_8$ représentatifs de la qualité de liaison du ciment sur des portions de tubage régulièrement réparties tout autour du sondage. Pour chaque transducteur $T_n$ on calcule (bloc 48) un signal $Q_n$ à chaque niveau par le rapport $W_{2n}/W_{1n}$ des signaux bruts provenant de ce transducteur. Comme décrit dans le brevet Havira déjà mentionné, ce rapport fournit un signal représentatif de la qualité de liaison du ciment sur la portion de tubage explorée par le transducteur $T_n$.

On calcule aussi (bloc 49) la moyenne $\overline{Q}$ des signaux $Q_n$ à chaque niveau et éventuellement la puissance quatrième $\overline{Q}^4$ de cette moyenne. La moyenne $\overline{Q}$ indique la qualité de liaison moyenne du ciment autour du tubage. Le signal $\overline{Q}^4$ est intéressant car il est proche des résultats obtenus par les appareils antérieurement utilisés pour la détection du ciment et permet une comparaison avec ces derniers.

Les signaux de mesure bruts et calculés sont transmis (bloc 50) à l'enregistreur magnétique pour être enregistrés sous forme numérique niveau par niveau sur une bande magnétique. Les signaux calculés sont de plus traités (bloc 51) pour fournir un nouvel enregistrement optique. Les étapes 47 à 51 sont effectuées niveau par niveau, c'est-à-dire tous les 5 cm de profondeur (bloc 53) jusqu'au dernier des niveaux à traiter (bloc 52).

L'étape de traitement 51 est représentée plus en détail sur la figure 4. Après une première étape d'initialisation (bloc 55) on sélectionne le premier signal $Q_n$ à étudier (bloc 56). Dans un premier mode de réalisation, on sélectionne comme premier signal étudié celui Q1 provenant du premier transducteur T1.

Les signaux étudiés Qn sont sélectionnés dans l'ordre Q1 à Q8 afin de faire correspondre chaque bande d'enregistrement aux signaux provenant d'un transducteur. Dans l'étape suivante, le signal de mesure Qn étudié est converti en un signal quantifié ayant huit valeurs possibles constituées par des nombres entiers de 0 à 7 (bloc 57). Cette étape comprend une première opération de changement d'échelle pour normaliser le signal Qn et amener sa plage de variation entre zéro et un, si ce n'est pas déjà le cas. Une deuxième opération consiste à multiplier par huit le signal normalisé et à garder seulement la partie entière qui est donc formée par un nombre entier allant de 0 à 7.

Pour chaque signal quantifié, on détermine ensuite (bloc 58) un code de nuance correspondant au nombre entier obtenu. Huit codes sont prédéterminés de façon à commander, après inscription dans la mémoire 43, l'enregistrement d'une nuance parmi une gamme échelonnée du blanc au noir. Chaque code est formé par une succession régulière de digits binaires dont la proportion de uns est fonction de la nuance de gris que l'on désire obtenir. Le code du noir est une suite de uns afin d'enregistrer des points formant une ligne continue sur le film-support de l'enregistreur. Le code du blanc est constitué exclusivement de zéros. Entre ces deux extrêmes, six autres codes sont prédéterminés par des successions répétitives de zéros et de uns, avec des proportions décroissantes de uns, de façon à obtenir six nuances de gris échelonnées du noir au blanc. Dans un mode de réalisation, les six codes prédéterminés ont des proportions de uns égales à 1/3, 1/4, 1/6, 1/8, 1/12 et 1/16 par rapport au nombre total de digits.

Le code sélectionné pour chaque signal quantifié est inscrit dans une section prédéterminée de la mémoire 43. Chaque section de mémoire correspond à une zone transversale sur le film-support. Huit sections de mémoire sont prédéterminées de façon à correspondre à huit zones contiguës disposées à la partie droite de l'enregistrement. Dans le mode de réalisation chaque section de mémoire comprend 48 éléments et correspond à un segment transversal d'environ 6 mm sur l'enregistrement. Les codes obtenus pour des signaux successivement examinés sont inscrits dans les sections successives de la mémoire 43. Les huit sections de la mémoire 43 sont ainsi successivement remplies par des zéros ou des uns. Comme on l'a vu précédemment, le contenu de la mémoire, lu en synchronisme avec le balayage de l'enregistreur, module une ligne transversale pour enregistrer, sur le support, une suite de points, un point étant inscrit à chaque occurrence d'un digit 1. Chaque section de mémoire commande donc l'enregistrement d'une ligne de points plus ou moins serrés, selon la valeur quantifiée de mesure correspondant. Les signaux Q̄ et Q̄⁴ sont aussi appliqués au circuit de traces 42 pour être enregistrés sous forme de courbes sur une partie gauche du film-support.

On passe ensuite au signal suivant (bloc 61) jusqu'au dernier des signaux (blocs 62 et 63).

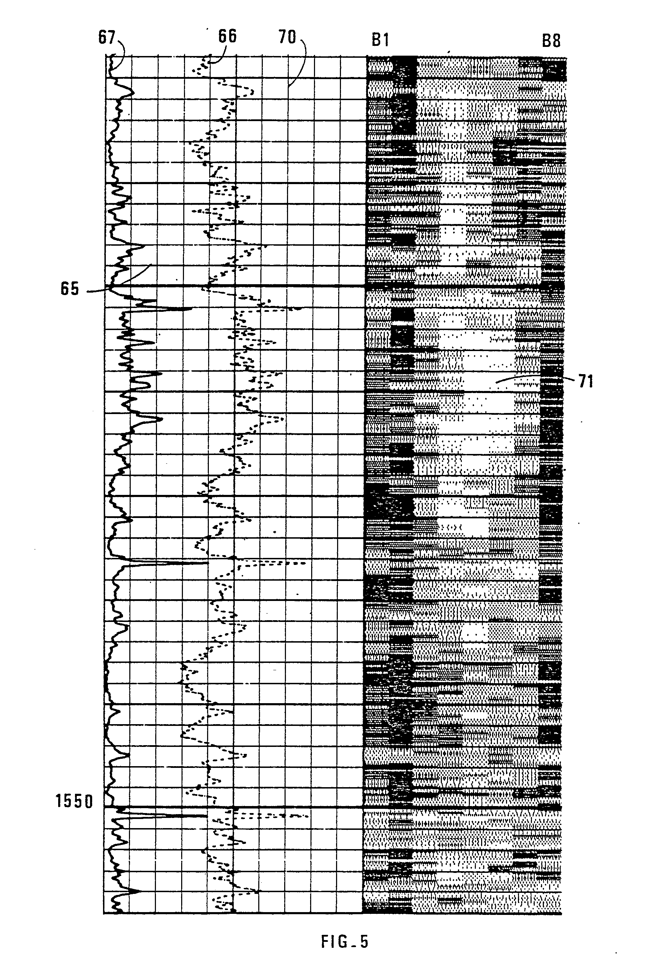

La figure 5 représente un enregistrement obtenu sur le film-support 33. Dans le sens longitudinal du support, c'est-à-dire verticalement sur la figure, se trouve l'échelle de profondeur avec des lignes transversales ou lignes de profondeur 65 et des nombres tels que 1550 portés à gauche pour indiquer la profondeur du sondage. La partie gauche de l'enregistrement est une représentation classique des signaux moyens Q̄ (en pointillé) et des signaux Q̄⁴ (en trait plein). Ces signaux sont représentés par deux courbes 65 et 66 dont les valeurs à chaque niveau sont indiquées par la position transversale de la trace sur l'échelle constituée par les lignes longitudinales ou ligne d'échelle 70.

La partie droite de l'enregistrement est formée par huit bandes contiguës B1 à B8 disposées parallèlement sur le support. Chaque bande est formée dans le sens longitudinal par une succession de zones juxtaposées dont les nuances sont déterminées, aux niveaux de profondeur successifs, en fonction des signaux Qn quantifiés. Dans le mode de réalisation décrit jusqu'à présent, chaque bande Bn correspond aux signaux Qn provenant du transducteur donné Tn. Chaque zone est formée par une ligne de points dont la densité est commandée par le code inscrit dans la mémoire 43, du fait que chaque point noir enregistré sur le film correspond à un digit 1 de la mémoire. On obtient ainsi une représentation de la périphérie du sondage sous forme d'une surface développée dont la nuance en chaque zone indique la qualité de liaison du ciment. Les parties foncées correspondent à une bonne liaison du ciment sur le tubage (signal Qn faible) et les parties claires à une mauvaise liaison (signal Qn élevé). Cet enregistrement fait apparaître clairement la présence de voies de communication longitudinales dans le ciment comme par exemple celle indiquée par la zone claire 71.

Dans le mode de réalisation décrit jusqu'à présent, une bande Bn de l'enregistrement correspond à un transducteur donné. Dans un mode de réalisation perfectionné, on tient compte des rotations éventuelles de l'appareil de fond pour faire correspondre sensiblement chaque bande Bn à une génératrice du tubage. Pour ce faire, on dispose dans l'appareil de fond, un détecteur de rotation qui peut être constitué par un balourd 73 monté tournant autour de l'axe de l'appareil de fond 10, et par un potentiomètre circulaire dont le curseur est entraîné par le balourd pour fournir à chaque profondeur un signal représentatif de la direction du transducteur T1 par rapport au plan vertical passant par l'axe de la sonde. Bien qu'un tel appareil ne donne pas de signal valable dans un sondage parfaitement vertical, il est suffisant, dans la majorité des cas, pour la détection de direction recherchée. D'autres types de détecteurs plus complexes peuvent aussi être utilisés comme par exemple un accéléromètre ou un détecteur gyroscopique. Chaque signal représentatif de la position angulaire du transducteur T1 est transmis en surface par l'intermédiaire du câble. Lors du traitement dans le calculateur 27, ce signal est utilisé dans l'étape de sélection 56 pour sélectionner comme premier signal celui qui provient du transducteur dont la position est la plus proche du plan du balourd, c'est-à-dire la génératrice basse du sondage. A partir de ce premier signal examiné, le traitement de la figure 4 est effectué en sélectionnant successivement les signaux des transducteurs disposés à 45° puis à 90°, 135°, 180°, 225°, 270° et 315° du premier. De cette façon, chaque bande de l'enregistrement correspond aux signaux de mesure se rapportant à une génératrice du tubage même si l'appareil de fond tourne dans le sondage. La position sur le film de la bande correspondant à la génératrice basse du tubage est prédéterminée soit au bord soit au milieu de la surface développée.

Le mode de réalisation décrit ci-dessus peut évidemment faire l'objet de nombreuses variantes sans sortir de la portée des revendications. L'enregistrement obtenu est intéressant pour d'autres applications que l'étude de la qualité de cimentation. D'une façon générale, le même procédé peut être utilisé pour représenter toute caractéristique physique mesurée à la périphérie du sondage en plusieurs zones autour du sondage. D'autres applications possibles seraient notamment des enregistrements de la corrosion ou de l'épaisseur du tubage tout autour du sondage ou même l'enregistrement d'une caractéristique se rapportant à la zone de formations à proximité immédiate d'un forage découvert.

**Revendications**

1. Procédé pour produire un enregistrement graphique d'une caractéristique physique de la périphérie d'un sondage, dans lequel on produit, à différents niveaux de profondeur du sondage, une pluralité de signaux de mesure respectivement représentatifs de ladite caractéristique physique sur des portions de cette périphérie réparties tout autour du sondage ; caractérisé en ce qu'il comprend en outre les étapes suivantes :
— à chaque niveau de profondeur, convertir lesdits signaux de mesure en signaux quantifiés ayant un nombre limité de valeurs possibles ;
— parmi un ensemble de codes prédéterminés, adaptés à commander l'enregistrement de nuances échelonnées du blanc au noir et correspondant respectivement auxdites valeurs quantifiées possibles, sélectionner, à chaque niveau, un code de nuance pour chaque signal, selon la valeur quantifiée de ce signal ; et
— enregistrer sur un support, à chaque niveau, et avec une échelle de profondeur longitudinale, au moins une ligne transversale modulée par les codes de nuance sélectionnés pour former, dans des bandes longitudinales du support, une série de zones aux nuances respectivement représentatives desdits signaux, de façon à représenter la périphérie du sondage sous forme d'une surface développée dont la nuance en chaque zone indique la valeur de ladite caractéristique à cet emplacement.

2. Procédé selon la revendication 1, caractérisé en ce que lesdits codes de nuances sont constitués par des successions de digits binaires pour moduler ladite ligne transversale de façon à enregistrer une ligne de points, lesdits codes ayant des proportions différentes de uns et de zéros pour obtenir des densités différentes de points selon les nuances.

3. Procédé selon l'une des revendications 1 ou 2, caractérisé en ce qu'il comprend de plus les étapes suivantes :
— élaborer un signal formé par la moyenne desdits signaux de mesure à chaque niveau ; et
— enregistrer sur ledit support une courbe représentative des variations du signal moyen pour indiquer la valeur moyenne de ladite caractéristique aux différents niveaux.

4. Procédé selon l'une des revendications 1 à 3, caractérisé en ce qu'il comprend de plus les étapes suivantes :
— produire, aux différents niveaux du sondage, un signal représentatif de la direction autour de l'axe du sondage, de la portion de la périphérie du sondage concernée par un signal de mesure prédéterminé ; et
— en réponse audit signal de direction, sélectionner dans quelles bandes longitudinales doivent être enregistrées les nuances représentatives des différents signaux de mesure, de façon que lesdites bandes longitudinales enregistrées se rapportent respectivement à des bandes longitudinales identifiées de la périphérie du sondage.

5. Procédé selon la revendication 4, caractérisé en ce que l'étape de production d'un signal de direction comprend l'étape consistant à détecter à chaque niveau l'angle entre la direction de ladite portion concernée par un signal de mesure prédéterminé et le plan vertical passant par l'axe du sondage audit niveau.

6. Procédé selon l'une des revendications précédentes, caractérisé en ce qu'il comprend les étapes suivantes :
— produire à chaque instant au cours d'un déplacement dans le sondage une pluralité de signaux bruts longitudinalement décalés le long du sondage ; et
— recaler en profondeur lesdits signaux bruts pour obtenir lesdits signaux de mesure.

7. Procédé selon l'une des revendications précédentes dans lequel le sondage est revêtu d'un tubage entouré de ciment, caractérisé en ce que les signaux de mesure produits sont représentatifs de la qualité de liaison du ciment sur des portions de tubage réparties autour du sondage de façon à produire un enregistrement qui représente la périphérie du sondage sous forme d'une surface développée dont la nuance en chaque zone indique la qualité de liaison du ciment.

8. Dispositif pour produire un enregistrement graphique d'une caractéristique physique de la périphérie d'un sondage (11), comprenant un appareil de fond (10) adapté à être déplacé dans le sondage et équipé d'une pluralité de transducteurs (20) pour produire à différents niveaux de profondeur du sondage une pluralité de signaux de mesure (Qi) respectivement représentatifs de ladite caractéristique sur des portions de cette périphérie réparties tout autour du sondage ; caractérisé en ce qu'il comprend en outre :

— des moyens de traitement (27) pour convertir, à chaque niveau de profondeur, lesdits signaux de mesure en signaux quantifiés ayant un nombre limité de valeurs possibles ; lesdits moyens de traitement comprenant une mémoire (43) contenant un ensemble de codes prédéterminés adaptés à commander l'enregistrement de nuances échelonnées du blan ou noir et correspondant respectivement auxdites valeurs quantifiées possibles, lesdits moyens de traitement étant de plus adaptés à sélectionner (58), à chaque niveau, dans ladite mémoire, un code de nuance pour chaque signal, selon la valeur quantifiée de ce signal ; et

— des moyens d'enregistrement (31) pour enregistrer sur un support (33) à chaque niveau, et avec une échelle de profondeur longitudinale, au moins une ligne transversale modulée par les codes de nuance sélectionnés pour former dans des bandes longitudinales (Bi) du support une série de zones aux nuances respectivement représentatives desdits signaux de mesure (Qi), de façon à représenter la périphérie du sondage (11) sous forme d'une surface développée dont la nuance en chaque zone indique la valeur de ladite caractéristique à cet emplacement.

9. Dispositif selon la revendication 8, caractérisé en ce que l'enregistrement de ladite ligne transversale est modulé par des codes de nuance constitués par des successions de digits binaires de façon à réaliser une ligne de points, sur ledit support (33), lesdits points ayant des densités déterminées par les proportions de uns et de zéros des différents codes pour obtenir les différentes nuances.

10. Dispositif selon l'une des revendications 8 et 9, caractérisé en ce que :

— lesdits moyens de traitement (27) sont adaptés à élaborer un signal formé par la moyenne desdits signaux de mesure (Qi) à chaque niveau ; et

— lesdits moyens d'enregistrement (31) sont adaptés à enregistrer sur ledit support (33) une courbe (67) représentative du signal moyen pour indiquer la valeur moyenne de ladite caractéristique aux différents niveaux.

11. Dispositif selon l'une des revendications 8 à 10, caractérisé en ce qu'il comprend de plus :

— des moyens (73) pour produire aux différents niveaux du sondage un signal représentatif de la direction, autour de l'axe du sondage, d'un desdits transducteurs ; et

— des moyens sensibles (27) audit signal de direction pour sélectionner dans quelles bandes longitudinales doivent être enregistrées les nuances représentatives des différents signaux de mesure de façon que lesdites bandes enregistrées se rapportent respectivement à des bandes longitudinales identifiées de la périphérie du sondage.

12. Dispositif selon la revendication 11, caractérisé en ce que lesdits moyens (73) pour produire un signal de direction comprennent un détecteur sensible à l'accélération de la pesanteur pour fournir un signal représentatif de la direction d'un desdits transducteurs par rapport à un plan vertical passant par l'axe du sondage.

13. Dispositif selon l'une des revendications 8 à 12, caractérisé en ce qu'il comprend de plus :

— des transducteurs acoustiques (20) longitudinalement décalés le long du sondage pour produire des signaux de mesure bruts ; et

— des moyens (47) pour recaler en profondeur lesdits signaux bruts pour obtenir lesdits signaux de mesure.

14. Dispositif selon l'une des revendications 8 à 13, caractérisé en ce que ledit appareil de fond (10) est adapté à produire des signaux de mesure (Qi) représentatifs de la qualité de liaison du ciment sur des portions d'un tubage (14) qui équipe le sondage (11), lesdites portions de tubage étant réparties tout autour du sondage ; de façon à produire un enregistrement qui représente la périphérie du tubage sous forme d'une surface développée dont la nuance en chaque zone indique la qualité de liaison du ciment.

**Claims**

1. Method for producing a graphic recording of a characteristic of the periphery of a borehole, comprising the step of producing, at different borehole depth levels, a plurality of measurement signals respectively representative of said characteristic for portions of the borehole periphery which are distributed around the borehole, characterized in that it further comprises the following steps :

— at each depth level, converting said measurement signals into quantified signals having a limited number of possible values ;

— among a limited number of predetermined codes adapted to control the recording of different shades which range from white to black and which correspond to said possible values, selecting, at each level, a shade code for each signal according to the quantified value of said signal ; and

— recording on a medium, at each level and with a longitudinal depth scale, at least one line which is modulated by said selected shade codes for producing on the support parallel bands each comprising a series of zones whose respective shades are representative of said quantified signals so as represent the periphery of the borehole in the form of a developed area whose shade in each zone indicates the value of the characteristic for said zone.

2. Method according to claim 1, characterized in that said shade codes are constituted by successions of binary digits for modulating said transverse line so as to record a line of points, said codes having different proportions of ones and zeros for producing different densities of points according to the shades.

3. Method according to claim 1 or 2, characterized in that it further comprises the following steps :

— generating a signal formed by the average of said measurement signals at each level ; and

— recording on said medium a curve representative of the variations of the average signal to indicate the average value of said characteristic at the different levels.

4. Method according to any one of claims 1 to 3, characterized in that it further comprises the following steps :

— producing at the different levels of the borehole a signal representative of the direction around the borehole axis of the portion of the borehole periphery related to a predetermined measurement signal ; and

— in response to said direction signal, selecting the longitudinal bands in which are to be recorded the shades respectively representative of the different measurement signals, so that said recorded longitudinal bands are related to respectively identified longitudinal strips of the borehole periphery.

5. Method according to claim 4, characterized in that the step of producing a direction signal comprises the step of detecting, at each level, the angle between the direction of the portion of periphery related to said predetermined measurement signal and the vertical plane going through the axis of the borehole at said level.

6. Method according to any one of the preceding claims, characterized in that it further comprises the following steps :

— producing at all times during a movement in the borehole a plurality of raw signals shifted longitudinally along the borehole ; and

— correlating in depth said raw signals to obtain said measurement signals.

7. Method according to any one of the preceding claims, said borehole comprising a casing surrounded by cement, characterized in that said produced measurement signals are representative of the bonding quality of the cement on portions of the casing distributed around the borehole so as to produce a recording which represents the periphery of the borehole in the form of a developed area whose shade in each zone indicates the bonding quality of the cement.

8. Apparatus for producing a graphic recording of a characteristic of the periphery of the borehole (11), comprising measuring means (10) adapted to be moved in the borehole and including a plurality of transducers (20) for producing at different borehole depth levels a plurality of measurement signals $(Q_i)$ respectively representative of said characteristic on portions of this periphery which are distributed around the borehole, characterized in that it further includes :

— processing means for converting, at each depth level, said measurement signals into quantified signals having a limited number of possible values, said processing means (27) comprising memory means (43) for storing a limited number of predetermined codes adapted to control the recording of different shades which range from white to black and which correspond respectively to said possible values, said processing means being further adapted for selecting (58) at each level, in said memory means, a shade code for each signal according to the quantified value of said signal ; and

— recording means (31) for recording on a medium (33), at each level and with a longitudinal depth scale, at least one line which is modulated by said selected shade codes for producing, on the support, parallel band $(B_i)$ comprising a series of zones whose respective shades are corresponding to said measurement signal $(Q_i)$ so as to represent the periphery of the borehole in the form of a developed area whose shade in each zone indicates the value of said characteristic for said zone.

9. Apparatus according to claim 8, characterized in that the recording of said transversal band is modulated by shade codes constituted by successions of binary digits so as to obtain a line of points, on said medium (33), said points having densities determined by the proportions of ones and zeros of the different codes for producing the different shades.

10. Apparatus according to claim 8 or 9, characterized in that said processing means (27) are adapted to generate a signal made up of the average of said measurement signals $(Q_i)$ at each level ; and said recording means (31) are adapted to record on said medium (33) a curve (67) representative of the average signal to indicate the average value of the characteristic at the different levels.

11. Apparatus according to any one of claims 8 to 10, characterized in that it further comprises :

— means (73) for producing at the different levels of the borehole a signal representative of the direction around the borehole of one of said transducers ; and

— means sensitive (27) to said direction signal for selecting the parallel bands in which are to be recorded the shades corresponding to the measurement signals, so that the recorded bands are related respectively to identified longitudinal strips of the borehole periphery.

12. Apparatus according to claim 11, characterized in that said means for producing a direction signal comprise a detector sensitive to the acceleration of gravity to furnish a signal representative of the direction of one of said transducers in relation to a vertical plane going through the axis of the borehole.

13. Apparatus according to any one of claims 8 to 12, characterized in that it further comprises :

— acoustic transducers (20) offset longitudinally along the borehole to produce raw measurement signals ; and

— means (47) for correlating in depth said raw signals to obtain said measurement signals.

14. Apparatus according to any one of claims 8 to 13, characterized in that said downhole measuring means (10) are adapted to produce measurement signal ($Q_i$) representative of the bonding quality of cement on portions of a surrounding casing (14) placed in the borehole, said portions of the casing being distributed around the borehole, so as to produce a recording which represents the periphery of the casing in the form of a developed area whose shade in each zone indicates the bonding quality of the cement.

**Patentansprüche**

1. Verfahren zum Erzeugen einer grafischen Aufzeichnung einer physikalischen Charakteristik der Peripherie einer Bohrung, bei dem man auf unterschiedlichen Tiefenniveaus der Bohrung eine Mehrzahl von Messignalen erzeugt, jeweils repräsentativ für die genannte physikalische Charakteristik, auf Abschnitten dieser Peripherie, die ringsum die gesamte Bohrung verteilt sind, dadurch gekennzeichnet, daß es ferner folgende Schritte umfaßt :
— Umsetzen der Messignale auf jedem Tiefenniveau in quantifizierte Signale mit einer begrenzten Anzahl möglicher Werte,
— Auswählen auf jedem Niveau aus einer Gesamtheit vorgegebener Codes, angepaßt zum Steuern der Aufzeichnung von abgestuften Nuancen von weiss bis schwarz und entsprechend jeweils den genannten quantifizierten möglichen Werten eines Nuancencodes für jedes Signal entsprechend dem quantifizierten Wert dieses Signals und
— Aufzeichnungen auf einem Träger für jedes Niveau und mit einem Längs-Tiefen-Maßstab mindestens einer Querlinie, moduliert durch die ausgewählten Nuancencodes zur Bildung in Längsbändern des Trägers einer Serie von Nuancezonen, die jeweils repräsentativ für die genannten Signale sind derart, daß die Peripherie der Bohrung in Form einer abgewinkelten Oberfläche repräsentiert wird, deren Nuance in jeder Zone den Wert der genannten Charakteristik an dieser Stelle angibt.

2. Verfahren nach Anspruch 1, dadurch gekennzeichnet, daß die genannten Nuancencodes von Aufeinanderfolgen binärer Digits gebildet sind zum Modulieren der genannten Transversallinie derart, daß eine Punktlinie aufgezeichnet wird, wobei die genannten Codes unterschiedliche Proportionen der Einsen und der Nullen haben, um unterschiedliche Punktdichten entsprechend den Nuancen zu erhalten.

3. Verfahren nach einem der Ansprüche 1 oder 2, dadurch gekennzeichnet, daß es darüberhinaus folgende Schritte umfaßt :
— Erzeugen eines Signals, gebildet durch den Mittelwert der genannten Messignale auf jedem Niveau und
— Registrieren auf dem genannten Träger einer Kurve, die repräsentativ ist für die Änderungen des mittleren Signals zur Anzeige des mittleren Wertes der genannten Charakteristik auf unterschiedlichen Niveaus.

4. Verfahren nach einem der Ansprüche 1 bis 3, dadurch gekennzeichnet, daß es darüberhinaus die folgenden Schritte umfaßt :
— Erzeugen, auf unterschiedlichen Bohrungsniveaus, eines Signals, das repräsentativ ist für die Richtung um die Achse der Bohrung herum des Abschnitts der Peripherie der Bohrung, der von einem vorgegebenen Messignal betroffen ist und
— Auswählen, im Ansprechen auf das genannte Richtungssignal, in welchen Längsbändern die Nuancen registriert werden müssen, die repräsentativ sind für unterschiedliche Messignale derart, daß die genannten registrierten Längsbänder in Beziehung stehen jeweils zu identifizierten Längsbändern der Bohrungsperipherie.

5. Verfahren nach Anspruch 4, dadurch gekennzeichnet, daß der Schritt der Erzeugung eines Richtungssignals den Schritt umfaßt, bestehend in der Erfassung, auf jedem Niveau, des Winkels zwischen der Richtung des genannten von einem vorgegebenen Messignal betroffenen Abschnitts und der Vertikalebene, die durch die Achse der Bohrung auf dem genannten Niveau verläuft.

6. Verfahren nach einem der vorangehenden Ansprüche, dadurch gekennzeichnet, daß es die folgenden Schritte umfaßt :
— Erzeugen, in jedem Zeitpunkt während einer Verlagerung in der Bohrung, einer Mehrzahl von Rohlängssignalen, die längs der Bohrung gestaffelt sind und
— Tiefen-Endstaffelung der genannten Rohsignale zum Gewinnen der genannten Messignale.

7. Verfahren nach einem der vorangehenden Ansprüche, bei dem die Bohrung mit einer Auskleidung versehen ist, die von Zement umschlossen ist, dadurch gekennzeichnet, daß die erzeugten Messignale repräsentativ sind für die Qualität der Bindung des Zements an Abschnitten der Auskleidung, verteilt um die Bohrung herum derart, daß eine Aufzeichnung erzeugt wird, die die Peripherie der Bohrung in Form einer abgewickelten Oberfläche darstellt, deren Nuance in jeder Zone die Qualität der Zementbindung angibt.

8. Anordnung zum Erzeugen einer grafischen Auszeichnung einer physikalischen Größe der Peripherie einer Bohrung (11) mit einem Bohrlochgerät (10), ausgebildet zum Verlagern in der Bohrung und versehen mit einer Mehrzahl von Umsetzern (20) zum Erzeugen, auf unterschiedlichen Bohrungstiefenniveaus einer Mehrzahl von Messignalen ($Qi$), die jeweils repräsentativ sind für die genannte Charakteristik auf Abschnitten dieser Peripherie, verteilt ringsum die Bohrung ; dadurch gekennzeichnet, daß sie ferner umfaßt :
— Verarbeitungsmittel (27) zum Umsetzen, auf jedem Tiefenniveau, der gennanten Messignale in quantifizierte Signale, die eine begrenzte Anzahl möglicher Werte haben ; wobei die genannten Verarbeitungsmittel einen Speicher (43) umfassen, der eine Gesamtheit von vorgegebenen Codes enthält, ausgebildet zum Steuern der Aufzeichnung von abgestuften Nuancen von weiss bis schwarz und entsprechend jeweils den genannten quantifizierten möglichen Werten, wobei die genannten Verarbeitungsmittel darüberhinaus ausgebildet sind zum Auswählen (58) auf jedem Niveau, eines Nuancencodes für jedes Signal in jedem Speicher entsprechend dem quantifizierten Wert dieses Signals und

— Aufzeichnungsmittel (31) zum Aufzeichnen auf einen Träger (33) für jedes Niveau, und mit einer Längs-Tiefenskala mindestens einer Querlinie, die von den ausgewählten Nuancencodes moduliert ist zum Bilden, in Längsbändern (Bi) des Trägers, einer Serie von Nuancenzonen, die jeweils repräsentativ sind für die genannten Messignale (Qi) derart, daß die Peripherie der Bohrung (11) in Form einer abgewickelten Oberfläche repräsentiert wird, deren Nuance in jeder Zone den Wert der genannten Charakteristik an dieser Stelle angibt.

9. Anordnung nach Anspruch 8, dadurch gekennzeichnet, daß die Aufzeichnung der genannten Querlinie moduliert wird durch Nuancencodes, gebildet durch Aufeinanderfolgen von binären Digits derart, daß eine Punktlinie auf dem genannten Träger (33) realisiert wird, wobei die genannten Punkte Dichten aufweisen, festgelegt durch die Proportionen der Einsen und der Nullen der unterschiedlichen Codes zum Gewinnen unterschiedlicher Nuancen.

10. Anordnung nach Anspruch 8 oder 9, dadurch gekennzeichnet, daß

— die genannten Verarbeitungsmittel (27) ausgebildet sind zum Erzeugen eines Signals, gebildet durch den Mittelwert der genannten Messignale (Qi) auf jedem Niveau und

— daß die genannten Aufzeichnungsmittel (31) ausgebildet sind zum Registrieren auf dem genannten Träger (33), einer Kurve (67), die repräsentativ ist für das mittlere Signal zur Anzeige des mittleren Wertes der genannten Charakteristik auf unterschiedlichen Niveaus.

11. Anordnung nach einem der Ansprüche 8 bis 10, dadurch gekennzeichnet, daß sie darüberhinaus umfaßt :

— Mittel (73) zum Erzeugen, auf unterschiedlichen Niveaus der Bohrung, eines Signals, das repräsentativ ist für die Richtung rings um die Achse der Bohrung, eines der genannten Umsetzer, und

— auf das genannte Richtungssignal ansprechende Mittel (27) zum Auswählen, in welchen Längsbändern die Nuancen registriert werden müssen, die repräsentativ sind für die verschiedenen Messignale derart, daß die genannten registrierten Bänder in Beziehung stehen, jeweils mit identifizierten Längsbändern der Bohrungsperipherie.

12. Anordnung nach Anspruch 11, dadurch gekennzeichnet, daß die genannten Mittel (73) zu Erzeugen eines Richtungssignals einen Detektor umfassen, der empfindlich ist für die Erdbeschleunigung zum Erzeugen eines Signals, das repräsentativ ist für die Richtung eines der genannten Umsetzer relativ zu einer Vertikalebene, die durch die Achse der Bohrung verläuft.

13. Anordnung nach einem der Ansprüche von 8 bis 12, dadurch gekennzeichnet, daß sie ferner umfaßt :

— akustische Umsetzer (20), die in Längsrichtung längs der Bohrung gestaffelt sind zum Erzeugen von Rohmessignalen und

— Mittel (47) zum Entstaffeln bezüglich der Tiefe der genannten Rohsignale zum Gewinnen der genannten Messignale.

14. Anordnung nach einem der Ansprüche 8 bis 13, dadurch gekennzeichnet, daß das genannte Tiefengerät ausgebildet ist zum Erzeugen von Messignalen (Qi), die repräsentativ sind für die Qualität der Bindung von Zement auf Abschnitten einer Verrohrung (14), welche die Bohrung (11) auskleidet, wobei die genannten Abschnitte der Verrohrung rings um die gesamte Bohrung verteilt sind derart, daß eine Registrierung erzeugt wird, die die Peripherie der Verrohrung in Form einer abgewickelten Fläche repräsentiert, deren Nuance in jeder Zone die Qualität der Zementbindung angibt.

0 055 634

FIG.1

FIG.2

```
            ┌──────────────┐
            │  1er NIVEAU  │────── 46
            └──────────────┘
                   │
                   ▼
        ┌────────────────────────┐
        │  RECALER EN PROFONDEUR │──── 47
        │     MESURES BRUTES     │
        └────────────────────────┘
                   │
                   ▼
        ┌────────────────────────┐
        │  CALCULER W2/W1 POUR    │──── 48
        │   CHAQUE TRANSDUCTEUR   │
        └────────────────────────┘
                   │
                   ▼
        ┌────────────────────────┐
        │  CALCULER W2/W1 MOYEN   │──── 49
        └────────────────────────┘
                   │
                   ▼
        ┌────────────────────────┐
        │  SORTIE DES DONNÉES VERS│──── 50
        │  ENREGISTREUR MAGNÉTIQUE│
        └────────────────────────┘
                   │
                   ▼
        ┌────────────────────────┐
        │    TRAITEMENT POUR      │──── 51
        │  ENREGISTREMENT OPTIQUE │
        └────────────────────────┘
                   │
                   ▼
```

FIG.3

```
        ◇ DERNIER NIVEAU ? ◇ ──NON──→ ┌──────────┐
                                       │  NIVEAU  │── 53
                │                      │ SUIVANT  │
               52                      └──────────┘
```

```
            ( INITIALISATION )────── 55
                   │
                   ▼
        ┌────────────────────────────┐
        │  SÉLECTIONNER 1er SIGNAL ÉTUDIÉ │── 56
        └────────────────────────────┘
                   │
                   ▼
        ┌────────────────────────────┐
        │   QUANTIFIER SIGNAL DE MESURE   │── 57
        │  EN UN NBRE ENTIER DE 0 A 7     │
        └────────────────────────────┘
                   │
                   ▼
        ┌────────────────────────────┐
        │  SELECTIONNER UN CODE DE NUANCE │── 58
        │  CORRESPONDANT AU NBRE ENTIER   │
        └────────────────────────────┘
                   │
                   ▼
        ┌────────────────────────────┐
        │     INSCRIRE CODE DANS UNE      │
        │ SECTION PRÉDÉTERMINÉE DE MÉMOIRE│── 60
        │  ET SORTIE VERS ENREGISTREUR    │
        └────────────────────────────┘
                   │
                   ▼
        ◇ DERNIER SIGNAL ? ◇ ──NON──→ ┌──────────┐
                │                      │  SIGNAL  │── 61
               OUI         62         │ SUIVANT  │
                │                      └──────────┘
                ▼
            (  FIN  )──── 63
```

FIG.4

2

FIG_5